# EUROPÄISCHE PATENTSCHRIFT

(11) **EP 0 462 510 B1**
(45) Veröffentlichungstag und Bekanntmachung des Hinweises auf die Patenterteilung: **11.01.1995**
(21) Anmeldenummer: 91109704.6
(22) Anmeldetag: 13.06.1991
(51) Int. Cl.: F16F 13/00, B60G 15/06, F16F 9/50

(54) **Dämpfungseinheit, für Radaufhängungssystem in Kraftfahrzeugen**
Damping unit, for wheel suspension systems in motor cars
Unité d'amortissement, pour systèmes de suspension dans voitures automobiles

(30) Priorität: 18.06.1990 DE 4019349
(43) Veröffentlichungstag der Anmeldung: 27.12.1991
(73) Patentinhaber: METZELER GIMETALL AG, D-80992 München (DE)
(72) Erfinder: Härtel, Volker, Dr., W-8034 Germering (DE); Sauer, Wolfgang, Dr., W-5149 Puderbach (DE); Spurk, Josef H., Prof. Dr., W-6123 Bad König/Oberkinzig (DE)
(74) Vertreter: Seibert, Hannelore

(56) Entgegenhaltungen:
- EP-A- 0 163 844
- EP-A- 0 270 456
- BE-A- 679 522
- DE-A- 1 430 836
- DE-A- 2 906 179
- DE-A- 2 947 018
- DE-A- 3 245 653
- DE-A- 3 610 611
- FR-A- 2 494 371
- US-A- 3 034 803

## Beschreibung

Die Erfindung bezieht sich auf eine Dämpfungseinheit, für Radaufhängungssysteme in Kraftfahrzeugen. gemäß dem Oberbegriff des Anspruchs 1.

Derartige Radaufhängungssysteme mit einer Hauptfederung beispielsweise in Form einer Stahlfeder zwischen gefederter und ungefederter Fahrzeugmasse und einem dazu parallel geschalteten Schwingungsdämpfer in Form eines Stoßdämpfers tragen sowohl das anteilige Fahrzeuggewicht als auch bedämpfen sie die über das Rad eingeleitete Fahrbahnanregungen und Karosserieschwingungen.

Relativbewegungen zwischen Rad und Karosserie werden dabei durch das Dämpfungsvermögen des Stoßdämpfers verringert. Im schwingenden Stoßdämpfer wird nämlich durch Verdrängungswirkung eine Flüssigkeitsbewegung erzeugt, deren kinetische Energie dissipiert, wodurch eine Dämpfung der Schwingungsamplituden entsteht. Die Anregungsamplituden auf das Federbein bestimmen daher auch den Betrag der dissipierten Energie im Stoßdämpfer.

Aus der DE-AS 1 430 836 ist eine Dämpfungsvorrichtung für die Federung von Kraftfahrzeugen bekannt, bei der zwischen gefederter und ungefederter Masse, also zwischen Karosserie und Rad, ein hydraulisches Stellglied angeordnet ist, bei dem mit dem Stellzylinder über eine Dämpfungsdrossel ein erster hydropneumatischer Speicher mit einem als Tragfeder wirkenden Hauptgaspolster und ungedrosselt ein zweiter hydropneumatischer Speicher ebenfalls mit einem Hilfsgaspolster angeschlossen sind. Mit einem solchen System soll ein möglichst breiter Frequenzbereich wirksam bedämpft werden, was jedoch nur im Falle einer mit Luft oder einem Gas arbeitenden Federung zu verwirklichen ist, die auf eine zusätzliche Preßluftversorgung angewiesen ist.

Der vorliegenden Erfindung liegt demgegenüber die Aufgabe zugrunde, ein Radaufhängungssystem in Form einer Dämpfungseinheit zu schaffen, mit dem unabhängig vom System der Hauptfederung eine bessere Dämpfung bewirkt wird und dies insbesondere bei Frequenzen, bei denen das System in Resonanz kommt.

Zur Lösung dieser Aufgabe ist erfindungsgemäß vorgesehen, daß mindestens eine flüssigkeitsgefüllte Arbeitskammer zumindest teilweise von einer elastisch nachgiebigen Wandung umschlossen ist, die gleichzeitig zumindest teilweise die Federfunktion übernimmt, und daß die Arbeitskammern über mehrere außer halb der eigentlichen Dämpfungs ein heit Liegenden Überströmkanäle mit mindestens einer, durch elastische Nachgiebigkeiten berandete Expansionskammern in Verbindung stehen derart, daß sich mindestens zwei unabhängig voneinander wählbare, frequenzabhängige Dämpfungsmaxima ergeben.

Mit einer solchen Dämpfungseinheit kann bei entsprechender Ausgestaltung auch die wesentliche tragende und federnde Funktion übernommen werden, so daß Feder und Dämpfer eine bauliche Einheit bilden. Das frequenzabhängige Dämpfungsvermögen wird dabei im wesentlichen bestimmt durch die Geometrie der Überströmkanäle und die Gestaltung der Expansionskammern, wodurch eine Abstimmung auf spezielle Resonanzfrequenzen des Federbeins möglich ist, das durch Hoch-, Nick- und Wankbewegungen der Karossie und der Radaufhängung angeregt wird.

Zur Abstimmung auf mehrere Resonanzfrequenzen können dabei von einer Arbeitskammer mehrere Überströmkanäle ausgehen, die in einer gemeinsamen Expansionskammer einmünden.

Es ist aber auch möglich, daß von einer Arbeitskammer mehrere Überströmkanäle ausgehen, die mit jeweils einer gesonderten Expansionskammer in Verbindung stehen, womit eine noch optimalere Abstimmung möglich ist.

Grundsätzlich ist es möglich, daß mehrere Arbeitskammern hintereinander geschaltet sind und von jeder Arbeitskammer mindestens ein Überströmkanal ausgeht, und daß die Überströmkanäle in einer gemeinsamen Expansionskammer einmünden.

Dabei können auch zwei Arbeitskammern kolbenseitig gegeneinander geschaltet sein und von jeder Arbeitskammer mindestens ein in eine gemeinsame Expansionskammer einmündender Überströmkanal ausgehen. Hierbei kann zwischen den beiden Kolben eine zusätzliche Tilgermasse angeordnet sein.

Für die Abstimmung auf unterschiedliche Resonanzfrequenzen ist es wesentlich, daß die Überströmkanäle jeweils unterschiedliche Länge und/oder unterschiedlichen Durchmesser aufweisen.

Ferner können die Expansionskammern unterschiedliches Volumen und/oder unterschiedliche Volumensteifigkeit aufweisen.

Auch bei einem Vorsehen von mehreren Arbeitskammern können diese unterschiedliche Volumensteifigkeiten aufweisen.

Zweckmäßig ist es ferner, wenn die elastisch nachgiebigen Berandungen der Arbeitskammer so gestaltet sind, daß sich eine amplitudenabhängig progessive Volumensteifigkeit ergibt.

Zur Tilgung sehr hochfrequenter Schwingungen können im Bereich der Arbeitskammern Entkopplungsmembranen zur wegabhängigen Amplitudenentkopplung angeordnet sein.

Neben einer Ausbildung der Arbeitskammern als alleiniges Trag- und Federelement ist es aber auch möglich, daß den Arbeitskammern eine mechanische Feder mit linearer oder progressiver Kennlinie parallel geschaltet ist.

Dabei können die Arbeitskammern koaxial von einer schraubenförmig gewickelten Stahlfeder umgeben sein.

Es ist aber auch möglich, daß eine Stahlfeder in die nachgiebige Wandung mindestens einer Arbeitskammer integriert ist.

Somit können durch die entsprechende Wahl von Überströmkanalgeometrie und Kammervolumensteifigkeiten die Resonanzbereiche auf die jeweiligen Federbeinresonanzen abgestimmt werden.

Anhand einer schematischen Zeichnung sind Aufbau und Funktionsweise von Ausführungsbeispielen nach der Erfindung näher erläutert. Dabei zeigen
- Fig. 1: ein Prinzipbild einer Dämpfungseinheit mit einer Arbeitskammer, jedoch mehreren Überströmkanälen und mehreren Expansionskammern,
- Fig. 2: eine Dämpfungseinheit mit einer Arbeitskammer, jedoch zwei Überströmkanälen und einer Expansionskammern,
- Fig. 3: ein Prinzipbild mit zwei in Reihe geschalteten Arbeitskammern und je einem in eine gemeinsame Expansionskammer mündenden Überströmkanal,
- Fig. 4: zwei gegeneinander geschaltete, jedoch kolbenseitig verbundene Arbeitskammern mit je einem Überströmkanal und einer Expansionskammer,
- Fig. 5: eine mögliche konstruktive Ausgestaltung einer Dämpfungseinheit mit tragender Funktion der Arbeitskammer und
- Fig. 6: eine weitere mögliche konstruktive Ausgestaltung mit einer zusätzlichen mechanischen Feder.

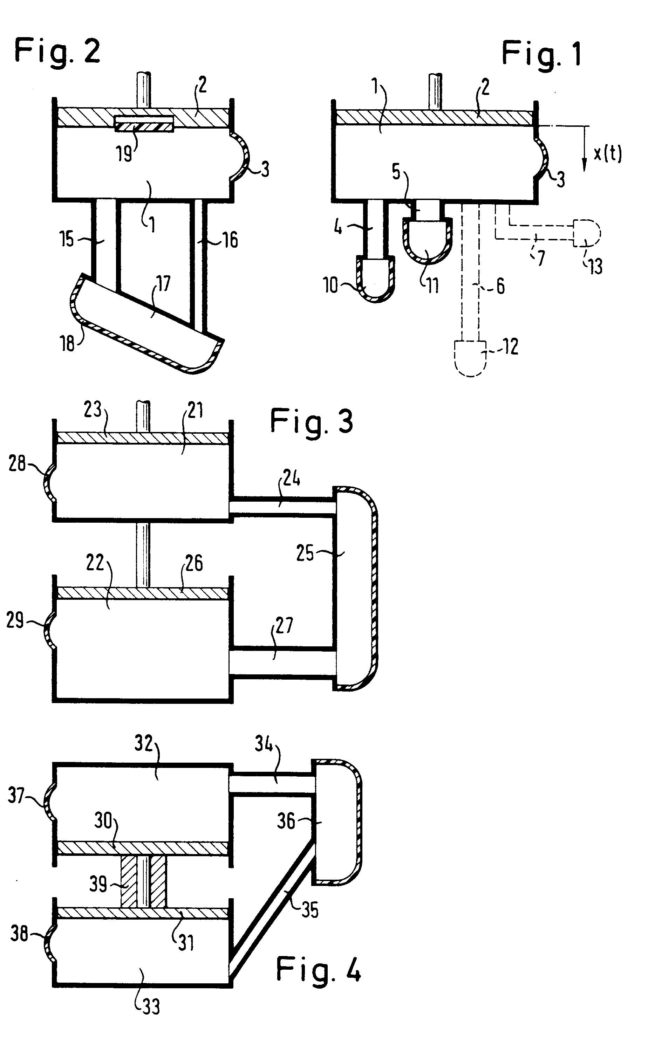

Nach dem in Fig. 1 dargestellten Prinzipbild ist die flüssigkeitsgefüllte Arbeitskammer 1, auf die von oben der Kolben 2 einwirkt, von einer elastischen Wandung 3 berandet, die eine entsprechende Volumensteifigkeit der Arbeitkammer 1 bewirkt. Von dieser Arbeitskammer 1 gehen eine Reihe von Kanälen 4, 5, 6 und 7 aus, die jeweils in entsprechende Expansionskammern 10, 11, 12 und 13 münden, die jeweils ganz oder teilweise durch elastische Nachgiebigkeiten berandet sind und entsprechend unterschiedliche Volumina und Volumensteifigkeiten aufweisen können.

Bei Einleitung einer Schwingungsamplitude in das System, d.h. bei einer Bewegung des Kolbens 2 mit der Amplitude x (t) ändert sich der Druck in der flüssigkeitsgefüllten Arbeitskammer 1 und die Flüssigkeit strömt durch die Kanäle 4, 5, 6 und 7 in das durch die Druckänderung freiwerdende Volumen der elastischen Kammerwände 10, 11, 12 und 13. Durch das Zusammenwirken von Trägheitskräften der Flüssigkeitsmassen in den Kanälen 4, 5, 6 und 7 und der Volumensteifigkeit der Kammerwände 10, 11, 12 und 13 entstehen schwingungsfähige Systeme, die in voneinander abgegrenzten Frequenzbereichen in Resonanz kommen. Durch geeignete Wahl der Geometrie der Kanäle 4, 5, 6 und 7, d.h. ihre Länge und ihren Durchmesser sowie der Volumensteifigkeiten der Expansionskammern 10, 11, 12 und 13 können die Resonanzbereiche auf die jeweiligen Federbeinresonanzen abgestimmt werden, so daß die kinetische Energie der Federbeinbewegungen dissi piert und die Anregungsamplituden gedämpft werden.

Üblicherweise wird ein solches System dabei so ausgelegt, daß einmal langsam aufeinanderfolgende Schwingungen, die im wesentlichen von der Karossiere stammen und in der Größenordnung von etwa 1 - 2 Hz liegen (Aufbaueigenfrequenz) sowie Frequenzen in der Größenordnung von etwa 10 - 15 Hz, wie sie bei Überfahren schnell aufeinanderfolgender Hindernisse auftreten (Radeigenfrequenz), besonders erfaßt und gedämpft werden. Das bedeutet, daß Geometrie und Volumen des entsprechenden Überströmkanals und der entsprechenden Expansionskammer so eingestellt werden, daß jeweils eine Flüssigkeitssäule in den Überströmkanälen bei diesen Frequenzen in Resonanz gerät.

Durch die Resonanzüberhöhung infolge des Trägheitseffektes im beschriebenen hydraulisch dämpfenden Federbein werden dabei größere Kraftamplituden erzeugt als durch die viskose Dissipation in herkömmlichen Stoßdämpfern.

Eine weitere Prinzipschaltung ist in Fig. 2 gezeigt. Hier gehen von der Arbeitskammer 1 zwei Überströmkanäle 15 und 16 aus, die jeweils unterschiedliche Längen und unterschiedlichen Durchmesser aufweisen, um damit auf unterschiedliche Frequenzen anzusprechen. Beide Überströmkanäle 15 und 16 münden in einer gemeinsamen Expansionskammer 17, die in gleicher Weise von einer elastischen Nachgiebigkeit 18 berandet ist.

Zusätzlich ist im Kolben 2 der Arbeitskammer 1 noch eine schwingungsfähige Membran 19 eingelassen, die bei hochfrequenten Schwingungen geringer Amplitude in Resonanz gerät und damit die dynamische Steifigkeit des Systems absenkt. Hiermit kann insbesondere ein besseres akustisches Übertragungsverhalten für akustische Schwingungen erreicht werden.

Bei dem Ausführungsbeispiel nach Fig. 3 sind zwei Arbeitskammern 21 und 22 derart hintereinander geschaltet, daß bei einem Druck auf den Kolben 23 der Arbeitskammer 21 nicht nur Flüssigkeit über den Überströmkanal 24 in die Expansionskammer 25 gedrückt wird, sondern daß die Arbeitskammer 21 selbst auf den Kolben 26 der zweiten Arbeitskammer 22 drückt und hierbei ebenfalls eine Flüssigkeitsverschiebung über die zweite Überströmleitung 27 in die Expansionskammer 25 bewirkt.

Durch unterschiedliche Volumina der Arbeitskammern 21 und 22, unterschiedliche elastische Nachgiebigkeiten 28 und 29 der beiden Arbeitskammern 21 und 22 und damit unterschiedlicher Volumensteifigkeit sowie der entsprechenden Geometrien der Überströmkanäle 24 und 27 lassen sich damit in weiten Bereichen eine Anpassung auf unterschiedliche Frequenzen vornehmen.

Eine weitere Gestaltungsmöglichkeit ist in Fig. 4 gezeigt, wo die Kolben 30 und 31 der beiden Arbeitskammern 32 und 33 so gegeneinander geschaltet und miteinander verbunden sind, daß bei Einwirkung auf eine Arbeitskammer unmittelbar auch die andere Arbeitskammer beeinflußt wird. Auch hierbei sind Überströmkanäle 34 und 35 unterschiedlichen Durchmessers und unterschiedlicher Länge vorgesehen, die in einer gemeinsamen Expansionskammer 36 einmünden. Die gegeneinandergeschalteten Kolben wirken dabei als zusätzliche Tilgermassen für das beschriebene System für bestimmte Resonanzfrequenzen. Es ist aber auch möglich, zusätzlich zwischen den beiden, miteinander verbundenen Kolben 30 und 31 eine weitere Tilgermasse 39 anzuordnen, deren Eigenfrequenz über ihre Masse und die Volumensteifigkeit der Kammern 32 und 33 abgestimmt werden kann. Damit ergibt sich ein weiterer Freiheitsgrad für diesen Dämpfer.

Da das Dämpfungsverhalten einer solchen Dämpfungseinheit und die entsprechenden Resonanzfrequenzen im wesentlichen von der Geometrie, d.h. Länge und Durchmesser der Überströmkanäle abhängen, ist es - wie in den Ausführungsbeispielen nach Fig. 2 bis 4 dargestellt - auch nicht erforderlich, jeden Überströmkanal in einer gesonderten Expansionskammer einmünden zu lassen, sondern es ist ausreichend, wenn eine einzige Expansionskammer für alle Überströmkanäle vorgesehen ist.

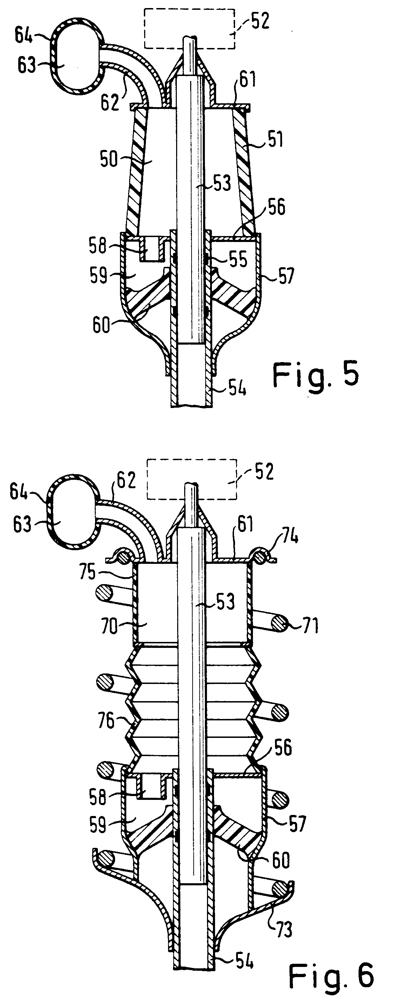

Mögliche konstruktive Ausgestaltungen sind in den Fig. 6 und 7 dargestellt.

Nach Fig. 6 weist die Dämpfungseinheit zunächst eine flüssigkeitsgefüllte Arbeitskammer 50 auf, die von einer starkwandigen Gummiwandung 51 berandet ist, die die eigentliche Trag- und Federfunktion des Federbeins übernimmt. Koaxial zur Arbeitskammer 50 verläuft die vom oberen, nur schematisch angedeuteten und an der Karosserie festgelegten Federbeinstützlager 52 die zentrale Mittelstange 53, deren unterer Bereich schiebend in dem Rohr 54 ,gehaltert ist, das am unteren Ende in nicht dargestellter Weise am jeweiligen Radlenker angebunden ist. Das Rohr 54 ist am oberen Ende über Ringdichtungen 55 gegenüber der Mittelstange 53 abgedichtet.

Die Arbeitskammer 50 ist unten durch die obere Stirnwandung 56 des Gehäuses 57 abgeschlossen, wobei in die Stirnwand 56 ein Überströmkanal 58 vorgegebenen Durchmessers und Länge eingelassen ist, der in der Expansionskammer 59 endet. Diese Expansionskammer 59 ist am unteren Ende mit einer elastischen Wandung 60 abgeschlossen, die innen am Rohr 54 und außen am Gehäuse 57 anvulkanisiert ist.

Vom Haltering 61, der die obere stirnseitige Begrenzung der Arbeitskammer 50 bildet, geht ein weiterer Überströmkanal 62 aus, der in einer Expansionskammer 63 mündet, die ebenfalls von einer elastischen Wandung 64 berandet ist.

Bei einer entsprechenden Schwingungseinleitung und damit einem Druckaufbau in der Arbeitskammer 50 wird nunmehr Flüssigkeit über die Kanäle 58 und 62 in die Expansionskammern 59 und 63 gedrückt. Durch Zusammenwirken von Trägheitskräften der Flüssigkeitsmassen in den eine vorgegebene Geometrie aufweisenden Kanälen 58 und 62 und den entsprechenden Volumensteifigkeiten V1 der Wandung 51 der Arbeitskammer 50, der Volumensteifigkeit V2 der Wandung 60 der Expansionskammer 59 sowie der Volumensteifigkeit V3 der Wandung 64 der Expansionskammer 63 entstehen schwingungsfähige Systeme, die in voneinander abgegrenzten Bereichen in Resonanz kommen.

Durch geeignete Wahl der Geometrie der Kanäle 58 und 62 und der Volumensteifigkeiten V1, V2 und V3 können die Resonanzbereiche auf die jeweiligen Federbeinresonanzen abgestimmt werden, so daß die kinetische Energie der Federbeinbewegungen dissipiert und die Anregungsamplituden gedämpft werden.

Bei dem Ausführungsbeispiel nach Fig. 7, bei dem für gleiche Teile die gleichen Bezugsziffern wie bei Fig. 6 verwendet sind, ist parallel zur innenliegenden Arbeitskammer 70 in konzentrischer Anordnung eine außenliegende, schraubenförmig gewickelte Stahlfeder 71 vorgesehen, die die eigentlichen Trag- und Federfunktionen übernimmt. Damit bewirkt der innenliegende Teil der Arbeitskammer 70 den Überströmkanälen 62 und 58 sowie den Expansionskammern 63 und 59 nur noch die dämpfende Funktion.

Bei dem in Fig. 7 dargestellten Ausführungsbeispiel übernimmt ein auskragender Bereich 73 des unteren Gehäuses 57 die untere Halterung für die Schraubenfeder 71, während der obere Haltering 61 mit einem überstehenden Flansch 74 das obere Ende der Schraubenfeder 71 aufnimmt. Der obere Gehäuseabschnitt 75 der Arbeitskammer 70, der jetzt keine tragende Funktion mehr zu übernehmen hat, ist aus einem elastomeren Material mit vorgegebener Volumensteifigkeit ausgebildet, an das sich nach unten ein Faltenbalg 76 zum Volumenausgleich anschließt, der am unteren Ende mit der Stirnplatte 56 verbunden ist.

Die Funktionsweise dieser Konstruktion ist im Prinzip die gleiche wie bei dem in Fig. 6 dargestellten Ausführungsbeispiel, nur daß jetzt die eigentliche Trag- und Federfunktion von der Schraubenfeder übernommen wird und der innenliegende Teil allein die entsprechenden Dämpferfunktionen erfüllt.

Bei beiden Ausführungsbeispielen nach Fig. 6 und 7 gehen von der Arbeitskammer 50 bzw. 70 jeweils zwei Überströmkanäle mit zwei anschließenden Expansionskammern aus. Es ist aber auch möglich, eine größere Anzahl derartiger Kanäle und Expansionskammern vorzusehen, je nach vorgegebenen Bedingungen und möglichen Resonanzbereichen, wie das in der Schemazeichnung nach Fig. 1 dargestellt ist.

Grundsätzlich wird also nach der vorliegenden Erfindung ein hydraulisch dämpfendes Federbein geschaffen, bei dem die Dämpfungswirkung oder Dissipation durch die Resonanzsysteme bestimmt wird und nur in den Frequenzbereichen wirkt und auf die Frequenzbereiche eingestellt ist, in denen das Federbein in Resonanz kommt. Dort erzeugen die durch die Rad- bzw. Karosseriebewegungen angeregten, schwingungsfähigen Systeme größere Kraftamplituden als in herkömmlichen Stoßdämpfein. Dies gilt auch, wenn mehrere Resonanzfrequenzen durch weitere Kanäle und Expansionskammern mit entsprechenden Volumensteifigkeiten erzeugt werden.

## Patentansprüche

1. Dämpfungseinheit für Radaufhängungssysteme in Kraftfahrzeugen mit einer von einem Kolben (2) beaufschlagten Arbeitskammer (1) und über einen Kanal (4) angeschlossenen Kammer (10) zur Aufnahme verdrängter Flüssigkeit, dadurch gekennzeichnet, daß mindestens eine flüssigkeitsgefüllte Arbeitskammer (1; 21,22; 32,33; 50; 70) zumindest teilweise von einer elastisch nachgiebigen Wandung (3; 28,29; 37,38; 51; 75) umschlossen ist, die gleichzeitig zumindest teilweise die Federfunktion übernimmt und daß die Arbeitskammern (1; 21,22; 32,33; 50; 70) über mehrere, außerhalb der eigentlichen Dämpfungseinheit liegenden Überströmkanäle (4,5,6,7; 24,27; 34,35; 58,62) mit mindestens einer, durch elastische Nachgiebigkeiten (18; 60,64) berandete Expansionskammern (10,11,12,13; 17; 25; 36; 59,63) in Verbindung stehen derart, daß sich mindestens zwei unabhängig voneinander wählbare, frequenzabhängige Dämpfungsmaxima ergeben.

2. Dämpfungseinheit nach Anspruch 1, dadurch gekennzeichnet, daß von einer Arbeitskammer (1) mehrere Überströmkanäle (4, 5, 6, 7) ausgehen, die mit jeweils einer gesonderten Expansionskammer (10, 11, 12, 13) in Verbindung stehen.

3. Dämpfungseinheit nach Anspruch 1, dadurch gekennzeichnet, daß von einer Arbeitskammer (1) mehrere Überströmkanäle (15, 16) ausgehen, die in einer gemeinsamen Expansionskammer (17) einmünden.

4. Dämpfungseinheit nach Anspruch 1, dadurch gekennzeichnet, daß mehrere Arbeitskammern (21, 22) hintereinander geschaltet sind und von jeder Arbeitskammer (21, 22) mindestens ein Überströmkanal (24, 27) ausgeht, und daß die Überströmkanäle (24, 27) in einer gemeinsamen Expansionskammer (25) einmünden.

5. Dämpfungseinheit nach Anspruch 1, dadurch gekennzeichnet, daß zwei Arbeitskammern (32, 33) kolbenseitig gegeneinander geschaltet sind und daß von jeder Arbeitskammer (32, 33) mindestens ein in eine gemeinsame Expansionskammer (36) einmündender Überströmkanal (34, 35) ausgeht.

6. Dämpfungseinheit nach Anspruch 5, dadurch gekennzeichnet, daß zwischen den Kolben (30, 31) für die beiden Arbeitskammern (32, 33) eine zusätzliche Tilgermasse (39) angeordnet ist.

7. Dämpfungseinheit nach einem der Ansprüche 1 bis 5, dadurch gekennzeichnet, daß die Überströmkanäle (4 bis 7; 15, 16; 34, 35; 58, 62) jeweils unterschiedliche Länge aufweisen.

8. Dämpfungseinheit nach einem der Ansprüche 1 bis 5 oder 7, dadurch gekennzeichnet, daß die Überströmkanäle (4 bis 7; 15, 16; 24, 27; 34, 35; 58, 62) jeweils unterschiedlichen Durchmesser aufweisen.

9. Dämpfungseinheit nach Anspruch 2, dadurch gekennzeichnet, daß die Expansionskammern (10, 11, 12, 13; 59, 63) unterschiedliche Volumensteifigkeiten aufweisen.

10. Dämpfungseinheit nach Anspruch 1, 4 oder 5, dadurch gekennzeichnet, daß die Arbeitskammern (21, 22; 32, 33) unterschiedliche Volumensteifigkeiten aufweisen.

11. Dämpfungseinheit nach einem der Ansprüche 1 bis 11, dadurch gekennzeichnet, daß die elastisch nachgiebigen Berandungen (3; 28, 29; 37, 38; 51; 75) der Arbeitskammern (1; 21, 22; 32, 33; 50; 70) so gestaltet sind, daß sich eine amplitudenabhängig progressive Volumensteifigkeit ergibt.

12. Dämpfungseinheit nach einem oder mehreren der Ansprüche 1 bis 11, dadurch gekennzeichnet, daß im Bereich der Arbeitskammer (1) eine Entkopplungsmembran (19) zur wegabhängigen Amplitudenentkopplung angeordnet ist.

13. Dämpfungseinheit nach einem oder mehreren der Ansprüche 1 bis 13, dadurch gekennzeichnet, daß den Arbeitskammern (70) eine mechanische Feder (71) mit linearer Kennlinie parallel geschaltet ist.

14. Dämpfungseinheit nach Anspruch 14, dadurch gekennzeichnet, daß die Arbeitskammer (70) koaxial von einer schraubenförmig gewickelten Stahlfeder (71) umgeben ist.

15. Dämpfungseinheit nach Anspruch 14, dadurch gekennzeichnet, daß eine Stahlfeder in die nachgiebige Wandung mindestens einer Arbeitskammer integriert ist.

16. Dämpfungseinheit nach einem oder mehreren der Ansprüche 1 bis 16, dadurch gekennzeichnet, daß durch entsprechende Wahl von Überströmkanalgeometrie und Kammervolumensteifigkeiten die Resonanzbereiche auf die jeweiligen Federbeinresonanzen abgestimmt sind.

## Claims

1. Damping unit for wheel suspension systems in motor vehicles, with a working chamber (1) pressurised by a piston (2) and a chamber (10) for receiving displaced fluid, connected via a channel (4), characterised in that at least one working chamber (1; 21,22; 32, 33; 50; 70) filled with fluid is at least partially enclosed by one elastic flexible side (3; 28, 29; 37, 38; 51; 75) that at the same time takes over the spring function at least partially and that the working chambers (1; 21, 22; 32, 33; 50; 70) are connected to several overflow channels (4, 5, 6, 7; 24, 27; 34, 35; 58, 62) situated outside the actual damping unit, to at least one of the expansion chambers (10, 11, 12, 13; 17; 25; 36; 59, 63) bounded by elastic compliant elements (18; 60, 64), so as to produce at least two independently-selectable, frequency-dependent damping maxima.

2. Damping unit according to Claim 1, characterised in that several overflow channels (4, 5, 6, 7), that are connected to respective separate expansion chambers (10, 11, 12, 13), lead out from one working chamber (1).

3. Damping unit according to Claim 1, characterised in that several overflow channels (15, 16), that open into a common expansion chamber (17), lead out from one working chamber (1).

4. Damping unit according to Claim 1, characterised in that several working chambers (21, 22) are connected in series and at least one overflow channel (24, 27) leads out from each working chamber (21, 22), and that the overflow channels (24, 27) open into a common expansion chamber (25).

5. Damping unit according to Claim 1, characterised in that two working chambers (32, 33) are connected together on opposite sides of the piston, and that at least one overflow channel (34, 35) leads out from each working chamber (32, 33) and opens into a common expansion chamber (36).

6. Damping unit according to Claim 5, characterised in that an additional damping mass (39) is arranged between the pistons (30, 31) for the two working chambers (32, 33).

7. Damping unit according to one of the Claims 1 to 5, characterised in that each of the overflow channels (4 to 7; 15, 16; 34, 35; 58, 62) has a different length.

8. Damping unit according to one of the Claims 1 to 5 or 7, characterised in that each of the overflow channels (4 to 7; 15, 16; 24, 27; 34, 35; 58, 62) has a different diameter.

9. Damping unit according to Claim 2, characterised in that the expansion chambers (10, 11, 12, 13; 59, 63) have different volumetric rigidities.

10. Damping unit according to Claim 1, 4 or 5, characterised in that the working chambers (21, 22; 32; 33) have different volumetric rigidities.

11. Damping unit according to one of the Claims 1 to 10, characterised in that the elastic, compliant boundaries (3; 28, 29; 37, 38; 51; 75) of the working chambers (1; 21, 22; 32, 33; 50; 70) are configured so as to produce a progressive, amplitude-dependent volumetric rigidity.

12. Damping unit according to one or more of the Claims 1 to 11, characterised in that a decoupling diaphragm (19) for displacement-dependent amplitude decoupling is arranged in the region of the working chamber (1).

13. Damping unit according to one or more of the Claims 1 to 12, characterised in that a mechanical spring (71) with a linear characteristic is connected in parallel with the working chambers (70).

14. Damping unit according to Claim 13, characterised in that the working chamber (70) is coaxially enclosed by a helically-wound steel spring (71).

15. Damping unit according to Claim 14, characterised in that a steel spring is incorporated into the compliant side of at least one working chamber.

16. Damping unit according to one or more of the Claims 1 to 15, characterised in that the resonance ranges are matched to the respective shock absorber resonances by suitable choice of overflow channel geometry and chamber volume rigidities.

## Revendications

1. Unité d'amortissement pour des systèmes de suspension de roues dans des véhicules automobiles, comportant une chambre de travail (1) chargée par un piston (2), et une chambre (10) raccordée par l'intermédiaire d'un canal (4) et servant à recevoir un liquide refoulé, caractérisée en ce qu'au moins une chambre de travail (1; 21, 22;32,33;50;70) remplie par un liquide est entourée au moins en partie par une paroi flexible élastiquement (3;28,29;37, 38;51;75), qui assure simultanément au moins en partie la fonction d'un ressort, et que les chambres de travail (1;21,22;32,33;50;70) sont reliées, par l'intermédiaire de plusieurs canaux de trop-plein (4,5,6,7;24,27;34,35;58,52), qui sont situés à l'extérieur de l'unité d'amortissement proprement dite, à au moins une chambre d'expansion (10,11, 12,13;17;25;36;59,63), bordée par des parties flexibles élastiques (18;60,64), de sorte qu'on obtient au moins deux maxima d' amortissement, qui peuvent être sélectionnées d'une manière indépendante l'une de l'autre et dépendent de la fréquence.

2. Unité d' amortissement suivant la revendication 1, caractérisée par le fait qu'à partir d'une chambre de travail (1) s'étendent plusieurs canaux de trop-plein (4,5,6, 7), qui sont reliés respectivement à une chambre d'expansion particulière (10,11,12,13).

3. Unité d' amortissement suivant la revendication 1, caractérisée par le fait qu'à partir d'une chambre de travail (1) s'étendent plusieurs canaux de trop-plein (15, 16), qui debouchent dans une chambre commune d'expansion (17).

4. Unité d'amortissement suivant la revendication 1, caractérisée par le fait que plusieurs chambres de travail (21,22) sont disposées les unes derrière les autres et qu'au moins un canal de trop-plein (24,27) s'étend à partir de chaque chambre de travail (21,22), et que les canaux de trop-plein (24,27) débouchent dans une chambre commune d'expansion (25).

5. Unité d' amortissement suivant la revendication 1, caractérisée par le fait que deux chambres de travail (32,33) sont branchées en opposition, côté piston, et qu'au moins un canal de trop-plein (34,35), qui débouche dans une chambre commune d'expansion (36), s'étend à partir de chaque chambre de travail (32,33).

6. Unité d'amortissement suivant la revendication 5, caractérisée par le fait qu'une masse d'amortissement supplémentaire (39) est disposée entre les pistons (30,31) pour les deux chambres de travail (32,33).

7. Unité d' amortissement suivant l'une des revendications 1 à 5, caractérisée par le fait que les canaux de trop-plein (4 à 7; 15,16;34,35;58,62) possèdent respectivement des longueurs différentes.

8. Unité d'amortissement suivant l'une des revendications 5 à 7, caractérisée par le fait que les canaux de trop-plein (4 à 7; 15,16;24,27;34,35;58,62) possèdent respectivement des diamètres différents.

9. Unité d'amortissement suivant la revendication 2, caractérisée par le fait que les chambres d'expansion (10,11,12,13;59,63) possèdent des compliances volumétriques différentes.

10. Unité d'amortissement suivant la revendication 1, 4 ou 5, caractérisée par le fait que les chambres de travail (21,22;32,33) possèdent des compliances volumétriques différentes.

11. Unité d'amortissement suivant l'une des revendications 1 à 11, caractérisée par le fait que les bords élastiquement flexibles (3;28,29;37,38;51;75) des chambres de travail (1;21,22;32,33;50;70) sont agencés de telle sorte qu'on obtient une compliance volumétrique progressive en fonction de l'amplitude.

12. Unité d'amortissement suivant une ou plusieurs des revendications 1 à 11, caractérisée par le fait qu'une membrane de découplage (19) servant à réaliser le découplage d'amplitudes en fonction de la course de déplacement, est disposée au voisinage de la chambre de travail (1).

13. Unité d'amortissement suivant une ou plusieurs des revendications 1 à 13, caractériseé par le fait qu'un ressort mécanique (71) possédant une courbe caractéristique linéaire est branché en parallèle avec les chambres de travail (70).

14. Unité d' amortissement suivant la revendication 13, caractérisée par le fait que la chambre de travail (70) est entourée coaxialement par un ressort en acier (71) enroulé avec une forme hélicoïdale

15. Unité d' amortissement suivant la revendication 14, caractérisée par le fait qu'un ressort en acier est intégré dans la paroi flexible d'au moins une chambre de travail.

16. Unité d'amortissement suivant une ou plusieurs des revendications 1 à 15, caractérisée par le fait que, grâce à un choix correspondant de la géométrie des canaux de trop-plein et des compliances volumiques des chambres, les plages de résonance sont réglées sur les résonances respectives des jambes de suspension.
